# EUROPÄISCHE PATENTSCHRIFT

(11) **EP 3 343 182 B1**
(45) Veröffentlichungstag und Bekanntmachung des Hinweises auf die Patenterteilung: **04.09.2019**
(21) Anmeldenummer: 17210386.3
(22) Anmeldetag: 22.12.2017
(51) Int. Cl.: G01D 5/20

(54) **LINEARWEGSENSOR ZUM ERFASSEN EINER LINEARBEWEGUNG EINES GEGENSTANDS**
LINEAR PATH SENSOR FOR DETECTING A LINEAR DISPLACEMENT OF AN OBJECT
CAPTEUR DE TRAJECTOIRE LINÉAIRE DESTINÉ À DÉTECTER UN MOUVEMENT LINÉAIRE D'UN OBJET

(30) Priorität: 29.12.2016 DE 102016226318
(43) Veröffentlichungstag der Anmeldung: 04.07.2018
(73) Patentinhaber: Robert Bosch GmbH, 70442 Stuttgart (DE)
(72) Erfinder: Krause, Anna, 75181 Pforzheim (DE); Utermoehlen, Fabian, 71229 Leonberg (DE)

(56) Entgegenhaltungen:
- EP-A1- 0 447 017
- DE-B3-102011 010 682
- DE-U1-202011 051 607
- FR-A1- 2 790 313

## Beschreibung

Die Erfindung betrifft einen Linearwegsensor zum Erfassen einer Linearbewegung eines Gegenstands, mit einem mit dem Gegenstand verbindbaren/verbundenen Messwertgeber und mit wenigstens einer auf oder in einem Gehäuse fest angeordneten Messspule, wobei der Messwertgeber relativ zu der Messspule verschiebbar gelagert ist, und mit einer Einrichtung zum Erfassen einer Induktivität der Messspule durch eine Verschiebung des Messwertgebers beziehungsweise in Abhängigkeit von einer Verschiebung des Messwertgebers.

### Stand der Technik

Linearwegsensoren der eingangs genannten Art sind aus dem Stand der Technik bekannt. Diese arbeiten üblicherweise nach dem Wirbelstromprinzip. Als Messsignal wirkt dabei grundsätzlich eine Frequenzänderung eines Schwingkreises infolge einer Veränderung der Induktivität einer Messspule mit einem elektrisch leitfähigen Messwertgeber. Die Messspule induziert in dem Messwertgeber einen Wirbelstrom, der zu einer Induktivitätsänderung der Messspule selbst führt, die entsprechend mit einem elektrischen Schwingkreis einer Einrichtung zum Erfassen der Induktivität der Messspule verschaltet ist, dessen Resonanzfrequenz sich dann in Abhängigkeit der Induktivität verändert und somit zum Erfassen der Induktivität der Messspule dient. Eine toleranzrobuste Auslegung eines Linearwegsensors erfordert in der Regel den Einsatz von mehreren Messspulen und mehreren Messwertgebern, die in der Regel eine identische Geometrie aufweisen, in Messrichtung gesehen jedoch versetzt zueinander angeordnet sind.

Neben der Bewegung in Messrichtung beziehungsweise Verschieberichtung ist häufig auch davon auszugehen, dass sich der Messwertgeber in eine Richtung senkrecht zur Verschieberichtung bewegen kann. Auch ist ein Verkippen des Messwertgebers möglich. Durch die seitliche Bewegung oder das Verkippen wird der Abstand des Messwertgebers zu der jeweiligen Messspule verändert, was für das Messverfahren kritisch sein kann, weil die Wirbelstromeffekte in dem Messwertgeber empfindlich bei Abstandsveränderungen reagieren. Da ist es beispielsweise bekannt, zur Erhöhung der Robustheit, Korrekturspulen neben der eigentlichen Messspule vorzusehen, die dann bevorzugt mit einem eigenen Messwertgeber zusammenwirken. Während der eigentliche Messwertgeber eine Querschnittsvariation aufweist, sodass sich in Abhängigkeit der Schiebeposition des Messwertgebers die erzeugte Induktivität verändert, ist für die Korrekturspule ein Messwertgeber ohne Querschnittsveränderung vorgesehen.

Bei den Spulen handelt es sich meist um Planarspulen mit bevorzugt identischer Abmessung und quadratischer Grundfläche, die auf einer Leiterplatte integriert sind. Üblicherweise wird der Messwertgeber selbst ebenfalls als Leiterplatte ausgebildet. Nachteilig dabei sind der für diese Ausführungsform benötigte Bauraum sowie die erwähnte Empfindlichkeit auf einer Seitwärtsbewegung und/oder Verkippung des Messwertgebers.

Die Patentschrift DE 10 2011 010 682 B3 und die Gebrauchsmusterschrift DE 20 2011 051 607 U1 offenbaren jeweils einen Linearwegsensor mit einem Gehäuse, auf dem eine Messspule fest angeordnet ist. Außerdem weisen die Linearwegsensoren jeweils einen Messwertgeber auf, der koaxial zu dem jeweiligen Gehäuse angeordnet ist. Gemäß dem Linearwegsensor aus der Patentschrift DE 10 2011 010 682 B3 ist optional vorgesehen, dass der Messwertgeber rohrförmig ausgebildet ist.

Die Offenlegungsschrift FR 2 790 313 A1 beschreibt einen Messwertgeber, der einen Querschnitt aufweist, der sich entlang einer Erstreckung des Messwertgebers in Verschiebungsrichtung des Messwertgebers verändert.

### Offenbarung der Erfindung

Der Linearwegsensor mit den Merkmalen des Anspruchs 1 hat demgegenüber den Vorteil, dass Seitwärtsbewegungen und/oder ein Verkippen des Messwertgebers zu der Messspule auf einfache Art und Weise verhindert wird, sodass insbesondere auf eine zusätzliche Korrekturspule verzichtet werden kann. Erfindungsgemäß ist es vorgesehen, dass der Messwertgeber rohrförmig ausgebildet und koaxial zu dem Gehäuse angeordnet ist. Durch die koaxiale Anordnung und die rohrförmige Ausbildung zumindest des Messwertgebers wird erreicht, dass der Messwertgeber und das Gehäuse ineinander schiebbar sind, und dadurch aneinander auf einfache Art und Weise verschiebbar gelagert werden. Vorzugsweise ist auch das Gehäuse rohrförmig ausgebildet. Zweckmäßigerweise sind die Durchmesser von Messgeber und Gehäuse dazu derart gewählt, dass der Messgeber in dem Gehäuse oder das Gehäuse in dem Messgeber radial mit wenig Spiel, insbesondere spielfrei, gelagert ist.

Gemäß einer bevorzugten Ausführungsform der Erfindung ist vorgesehen, dass der Messgeber in dem Gehäuse verschiebbar ist. Dazu ist das Gehäuse rohrförmig ausgebildet und der Messgeber kann ebenfalls rohrförmig oder auch massiv ausgebildet sein.

Gemäß einer alternativen Ausführungsform ist bevorzugt vorgesehen, dass der Messwertgeber über das Gehäuse schiebbar ist. In diesem Fall weist also der Messwertgeber die Rohrform auf, um das Gehäuse aufzunehmen. In beiden Varianten ist eine vorteilhafte Führung von Messwertgeber und Gehäuse zueinander gewährleistet.

Erfindungsgemäß ist vorgesehen, dass der Messwertgeber eine Aussparung in seiner Mantelwand aufweist, deren Breite sich in Längserstreckung des Messwertgebers verändert. Die Aussparung und deren Form definieren dabei den Grad der Induktionsveränderung in der Messspule. Ist der Messwertgeber rohrförmig ausgebildet, so ist die Aussparung in der Mantelwand insbesondere als Durchbruch ausgebildet. Ist der Messgeber massiv ausgebildet, so ist die Aussparung in der Mantelwand als Vertiefung ausgebildet.

Gemäß einer bevorzugten Ausführungsform der Erfindung ist vorgesehen, dass die Aussparung dreiecksförmig oder keilförmig ausgebildet ist, insbesondere sodass sich ihre Breite in Verschieberichtung kontinuierlich vergrößert oder verkleinert. Dadurch kann in Abhängigkeit insbesondere der Resonanzfrequenz des Schwingkreises auf eine eindeutige Stellung des Messwertgebers zu der Messspule geschlossen und damit der Linearweg besonders gut bestimmt werden.

Weiterhin ist bevorzugt vorgesehen, dass auf oder in dem Gehäuse wenigstens eine Korrekturspule angeordnet ist. Dabei ist die Korrekturspule insbesondere an einem Bereich angeordnet, der beabstandet zu der Aussparung in der Mantelwand des Messwertgebers liegt, sodass die Induktivität der Korrekturspule nicht durch die Aussparung des Messwertgebers bei dessen Verschiebung beeinflusst wird. Dadurch wird die ohnehin schon hohe Messgenauigkeit weiter optimiert.

Außerdem ist bevorzugt vorgesehen, dass die Messspule und die Korrekturspule in Umfangsrichtung des Gehäuses gesehen nebeneinander angeordnet sind. So kann die Messspule und die Korrekturspule beispielsweise auf diametral gegenüberliegenden Seiten des Gehäuses angeordnet sein. Hierdurch ist sichergestellt, dass die Induktivität der Korrekturspule nicht durch die Aussparung im Messwertgeber beeinträchtigt wird.

Vorzugsweise ist an dem Gehäuse auch die Einrichtung angeordnet, welche die Induktivität der jeweiligen Spule erfasst, um daraus den Linearweg zu bemessen. Insbesondere weist die Einrichtung den zuvor bereits genannten Schwingkreis auf, wobei für jede der Spulen jeweils ein Schwingkreis vorgesehen ist. Alternativ kann es sich auch um einen gemeinsamen Schwingkreis in Kombination mit einem Multiplexer handeln, der die Spulen nacheinander in den Schwingkreis als frequenzbestimmendes Element verschaltet. Außerdem weist die Einrichtung Mittel zum Erfassen der Resonanzschwingung des jeweiligen Schwingkreises auf, um, wie zuvor bereits erläutert, die initiierte Induktivität und damit den Weg, um welchen der Messwertgeber verschoben wurde, zu ermitteln.

Im Folgenden soll die Erfindung anhand der Zeichnungen näher erläutert werden. Dazu zeigt
- Figur 1: ein erstes Ausführungsbeispiel eines vorteilhaften Linearwegsensors, und
- Figur 2: ein zweites Ausführungsbeispiel des Linearwegsensors.

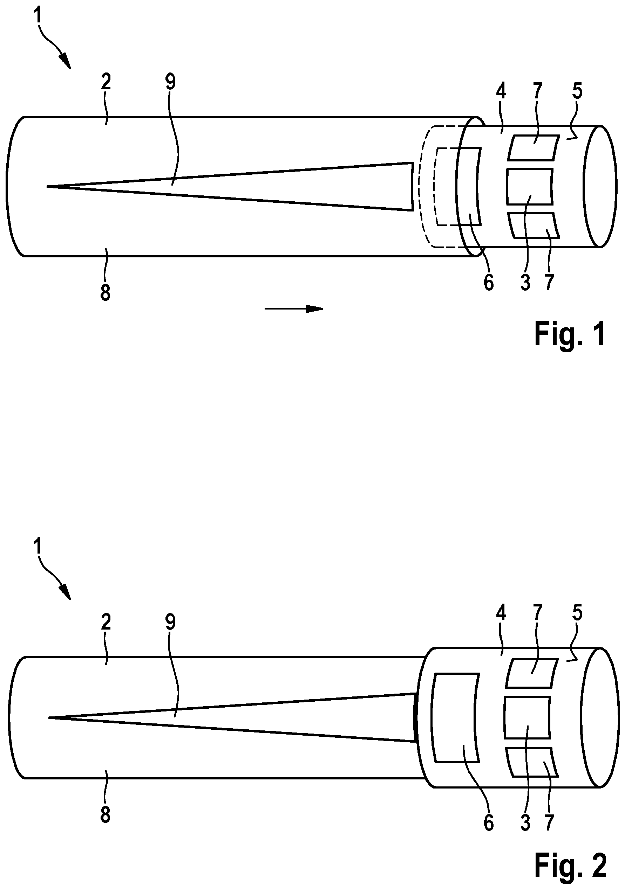

Figur 1 zeigt in einer vereinfachten Darstellung einen Linearwegsensor 1, der einen Messwertgeber 2 sowie eine Messspule 3 aufweist. Der Messwertgeber 2 ist dabei relativ zu der Messspule 3 verschiebbar, um eine Induktivitätsänderung der Messspule 3 zu erzeugen, die zum Bestimmen der Position des Messwertgebers 2 erfassbar ist. Der Messwertgeber 2 ist bevorzugt mit einem Gegenstand verbunden oder gekoppelt, dessen Linearbewegung überwacht werden soll. So kann es sich bei dem Gegenstand beispielsweise um den Kolben eines Dämpfers von einer Radaufhängung handeln. Auch kann beispielsweise der Bremskolben einer Radbremseinrichtung eines Kraftfahrzeugs oder eines Schaltgetriebes den Gegenstand bilden.

Dazu ist die Messspule 3 an einem zylinderförmigen Gehäuse 4 angeordnet, das einen kreisförmigen Querschnitt aufweist. Die Messspule 3 ist dabei auf einer Mantelaußenseite 5 des Gehäuses 4 angeordnet. An oder in dem Gehäuse 4 ist weiterhin eine Einrichtung 6 angeordnet, die mit der Messspule 3 elektrisch verbunden ist, um ihre Induktivität zu erfassen. Dazu weist die Einrichtung 6 für die Messspule 3 einen Schwingkreis auf, sowie Mittel zum Erfassen einer Resonanzfrequenz in dem Schwingkreis. Weiterhin sind in Umfangsrichtung des Gehäuses 4 gesehen benachbart zu der Messspule 3 zwei Korrekturspulen 7 angeordnet. Auch mit diesen ist die Einrichtung 6 verbunden und weist insbesondere für jede der Korrekturspulen 7 einen weiteren Schwingkreis und Mittel zum Erfassen der jeweiligen Resonanzfrequenz auf.

Der Messwertgeber 2 ist aus einem elektrisch leitfähigen Material rohrförmig ausgebildet und weist ebenfalls einen kreisförmigen Querschnitt auf. Dabei ist der Messwertgeber 2 hohl ausgebildet, sodass der Querschnitt eine Kreisringform bildet. In seiner Mantelwand 8 weist der Messwertgeber 2 eine Aussparung 9 auf. Die Aussparung ist dreiecksförmig derart ausgebildet, dass sich ihre Breite - in Umfangsrichtung des Messwertgebers 2 gesehen - über die Längserstreckung des Messwertgebers 2 kontinuierlich verändert, also vergrößert oder verkleinert. Vorliegend ist die Aussparung 9 dabei als Durchbruch in der Mantelwand 8 ausgebildet.

Der Innendurchmesser des rohrförmigen Messwertgebers 2 ist dabei derart gewählt, dass er zumindest im Wesentlichen dem Außendurchmesser des Gehäuses 4 entspricht, sodass Messwertgeber 2 und Gehäuse 4 radial im Wesentlichen spielfrei ineinander schiebbar sind, wie in Figur 1 gezeigt. Dabei ist das Gehäuse 4 in dem Messwertgeber 2 bereichsweise eingeschoben, oder - mit anderen Worten - der Messwertgeber 2 auf das Gehäuse 4 aufgeschoben. Zweckmäßigerweise sind dazu die an dem Gehäuse 4 angeordneten Elemente, wie Messspule 3, Korrekturspule 7 und Einrichtung 6 innerhalb des Außendurchmessers des Gehäuses 4 angeordnet, sodass sie nicht von diesem vorstehen.

Wie in Figur 1 gezeigt, ist der Messwertgeber 2 zu dem Gehäuse 4 derart ausgerichtet, dass die Aussparung 9 auf Höhe der Messspule 3 liegt. Bevorzugt weisen der Messwertgeber 2 und das Gehäuse 4 Führungsmittel auf, welche diese Ausrichtung des Messwertgebers 2 zu dem Gehäuse 4 gewährleisten, sodass die Aussparung 9 beim Verschieben des Messwertgebers 2 über das Gehäuse 4 hinweg, stets über die Messspule 3 geschoben wird. Als Führungsmittel können beispielsweise eine oder mehrere Längsnuten an der Innenseite des Messwertgebers 2 und/oder der Außenseite des Gehäuses 4 vorgesehen sein, die mit entsprechenden Vorsprüngen am Gehäuse 4 oder Messwertgeber 2 zur Längsführung der beiden Elemente zueinander zusammenwirken.

Wird nun der Messwertgeber 2 über das Gehäuse 4 geschoben, so ändert sich die Induktivität der Messspule 3 aufgrund der sich verändernden Querschnittsform beziehungsweise -breite der Aussparung 9. Dadurch ändert sich die Resonanzschwingung in dem zugeordneten Schwingkreis der Einrichtung 6, die von den Mitteln erfasst wird, sodass in Abhängigkeit der erfassten Resonanzschwingung auf die Schiebestellung des Messwertgebers 2 in einfacher Art und Weise geschlossen werden kann. Durch das Überwachen der Induktivität der Korrekturspule 7 kann dabei sichergestellt werden, dass Messwertgeber 2 und Gehäuse 4 korrekt zueinander ausgerichtet sind und beispielsweise nicht zueinander verkippt sind. Optional kann die Korrekturspule 7 bei der vorliegenden Ausführungsform auch entfallen, wenn der rohrförmige Messwertgeber 2 und das Gehäuse 4 derart radial spielfrei zusammenwirken, sodass ein Verkippen mechanisch ohnehin verhindert ist.

Figur 2 zeigt ein zweites Ausführungsbeispiel des Linearwegsensors 1, wobei aus dem vorhergehenden Ausführungsbeispiel bereits bekannte Elemente mit den gleichen Bezugszeichen versehen sind, sodass insofern auf die obenstehende Beschreibung verwiesen wird. Im Folgenden soll im Wesentlichen auf die Unterschiede eingegangen werden.

Im Unterschied zu dem vorhergehenden Ausführungsbeispiel ist vorgesehen, dass nicht das Gehäuse 4 in den rohrförmigen Messwertgeber 2, sondern der Messwertgeber 2 in das rohrförmig ausgebildete Gehäuse 4 eingeschoben wird. Zweckmäßigerweise sind auch hier die Durchmesser derart gewählt, dass Messwertgeber 2 und Gehäuse 4 radial zumindest im Wesentlichen spielfrei zueinander angeordnet sind, sodass eine sichere und eindeutige Führung des Messwertgebers 2 an dem Gehäuse 4 gewährleistet ist. Der Messwertgeber 2 kann dabei massiv oder wie zuvor auch rohrförmig ausgebildet sein. Bei einer massiven Ausführungsform ist die Aussparung 9 insbesondere als Radialvertiefung in der Mantelwand 8 des Messwertgebers 2 ausgebildet. Zweckmäßigerweise sind auch hier Führungsmittel vorgesehen, die die Ausrichtung des Messwertgebers 2 bezüglich des Gehäuses 4 in Bezug auf den Verdrehwinkel, gewährleistet, sodass die Aussparung 6 stets auf Höhe der Messspule 3 liegt.

Während in den vorliegenden Ausführungsbeispielen die rohrförmige Ausbildung stets einen kreisförmigen Querschnitt des Grenzwertgebers und/oder des Gehäuses 4 bedeutet, ist gemäß einem weiteren Ausführungsbeispiel vorgesehen, dass anstelle des kreisförmigen Querschnitts der Messwertgeber 2 und das Gehäuse 4 eine von einer Kreisform abweichende Querschnittsform aufweisen, insbesondere um hierdurch eine Verdrehsicherung zwischen Messwertgeber 2 und Gehäuse 4 zu bilden. So kann die Rohrform beispielsweise einen ovalen Querschnitt oder beispielsweise einen mehreckigen Querschnitt aufweisen. Der Messwertgeber 2 ist vorzugsweise aus einem paramagnetischen Material, wie beispielsweise Aluminium oder Eisen gefertigt. Die Länge der Aussparung 9 entlang des Messwertgebers 2 ist vorzugsweise derart gewählt, dass sie der Länge des zu erfassenden Messwegs, vorzugsweise inklusive vorgebbarer Toleranzen, entspricht. Das Gehäuse ist zweckmäßigerweise aus einem elektrisch nicht-leitfähigen Material gefertigt. Die Spulen 3 und 7 können dabei auf der der Aussparung 9 zugewandten Seite des Gehäuses 4 angeordnet sein, oder auch auf der von der Aussparung 9 abgewandten Seite. Damit kann die jeweilige Spule 3, 7 beispielsweise sowohl auf der Außenseite als auch auf der Innenseite des rohrförmigen Gehäuses 4 angeordnet sein.

## Patentansprüche

1. Linearwegsensor (1) zum Erfassen einer Linearbewegung eines Gegenstands, mit einem mit dem Gegenstand verbindbaren/verbundenen rohrförmig ausgebildeten Messwertgeber (2) und mit wenigstens einer auf oder in einem Gehäuse (4) fest angeordneten Messspule (3), wobei der Messwertgeber (2) und das Gehäuse (4) koaxial zueinander angeordnet sind und der Messwertgeber (2) relativ zu der Messspule (3) verschiebbar gelagert ist, und mit einer Einrichtung (6) zum Erfassen der Induktivität der Messspule (3) durch eine Verschiebung des Messwertgebers (2), **dadurch gekennzeichnet, dass** der Messwertgeber (2) eine Aussparung (9) in seiner Mantelwand (8) aufweist, deren Breite sich in Längserstreckung des Messwertgebers (2) verändert.

2. Linearwegsensor nach Anspruch 1, **dadurch gekennzeichnet, dass** das Gehäuse rohrförmig ausgebildet ist.

3. Linearwegsensor nach einem der vorhergehenden Ansprüche, **dadurch gekennzeichnet, dass** Durchmesser des Messwertgeber (2) und des Gehäuses (4) derart gewählt sind, dass der Messwertgeber (2) und das Gehäuse (4) radial zumindest im Wesentlichen spielfrei aneinandergeführt sind.

4. Linearwegsensor nach Anspruch 2, **dadurch gekennzeichnet, dass** der Messwertgeber in dem Gehäuse (4) verschiebbar gelagert ist.

5. Linearwegsensor nach einem der Ansprüche 1 und 2, **dadurch gekennzeichnet, dass** der Messwertgeber (2) auf dem Gehäuse (4) verschiebbar gelagert ist.

6. Linearwegsensor nach einem der Ansprüche 1 und 2, **dadurch gekennzeichnet, dass** die Aussparung (9) dreiecksförmig oder keilförmig ausgebildet ist.

7. Linearwegsensor nach einem der Ansprüche 1 und 2, **dadurch gekennzeichnet, dass** auf oder in dem Gehäuse (4) wenigstens eine Korrekturspule (7) angeordnet ist.

8. Linearwegsensor nach Anspruch 7 in Kombination mit Anspruch 2, **dadurch gekennzeichnet, dass** die Messspule (3) und die Korrekturspule (7) in Umfangsrichtung des Gehäuses (4) gesehen nebeneinander angeordnet sind.

9. Linearwegsensor nach einem der Ansprüche 1 und 2, **dadurch gekennzeichnet, dass** auf oder in dem Gehäuse (4) die Einrichtung (6) angeordnet ist.

## Claims

1. Linear path sensor (1) for detecting a linear movement of an object, comprising a measurement value transducer (2), which is connectable/connected to the object and is embodied in a tubular fashion, and comprising at least one measurement coil (3) arranged fixedly on or in a housing (4), wherein the measurement value transducer (2) and the housing (4) are arranged coaxially with respect to one another and the measurement value transducer (2) is mounted displaceably relative to the measurement coil (3), and comprising a device (6) for detecting the inductance of the measurement coil (3) as a result of a displacement of the measurement value transducer (2), **characterized in that** the measurement value transducer (2) has a cutout (9) in its lateral wall (8), the width of said cutout varying in the longitudinal extent of the measurement value transducer (2).

2. Linear path sensor according to Claim 1, **characterized in that** the housing is embodied in a tubular fashion.

3. Linear path sensor according to either of the preceding claims, **characterized in that** diameters of the measurement value transducer 9(2) and of the housing (4) are chosen in such a way that the measurement value transducer (2) and the housing (4) are guided against one another radially at least substantially without play.

4. Linear path sensor according to Claim 2, **characterized in that** the measurement value transducer is mounted displaceably in the housing (4) .

5. Linear path sensor according to either of Claims 1 and 2, **characterized in that** the measurement value transducer (2) is mounted displaceably on the housing (4).

6. Linear path sensor according to either of Claims 1 and 2, **characterized in that** the cutout (9) is embodied in a triangular or wedge-shaped fashion.

7. Linear path sensor according to either of Claims 1 and 2, **characterized in that** at least one correction coil (7) is arranged on or in the housing (4).

8. Linear path sensor according to Claim 7 in combination with Claim 2, **characterized in that** the measurement coil (3) and the correction coil (7) are arranged next to one another as viewed in the circumferential direction of the housing (4).

9. Linear path sensor according to either of Claims 1 and 2, **characterized in that** the device (6) is arranged on or in the housing (4).

## Revendications

1. Capteur de trajectoire linéaire (1), destiné à détecter un déplacement linéaire d'un objet, pourvu d'un transducteur de mesure (2) conçu sous forme tubulaire, susceptible d'être relié/relié avec l'objet et d'au moins une bobine de mesure (3) placée de manière fixe sur ou dans un boîtier (4), le transducteur de mesure (2) et le boîtier (4) étant placés de manière coaxiale l'un par rapport à l'autre et le transducteur de mesure (2) étant logé en étant déplaçable par rapport à la bobine de mesure (3), et pourvu d'un système (6) destiné à détecter l'inductance de la bobine de mesure (3) par un déplacement du transducteur de mesure (2), **caractérisé en ce que** le transducteur de mesure (2) comporte dans sa paroi d'enveloppe (8) une encoche (9) dont la largeur varie dans l'extension longitudinale du transducteur de mesure (2).

2. Capteur de trajectoire linéaire selon la revendication 1, **caractérisé en ce que** le boîtier est conçu sous forme tubulaire.

3. Capteur de trajectoire linéaire selon l'une quelconque des revendications précédentes, **caractérisé en ce que** le diamètre du transducteur de mesure (2) et du boîtier (4) est sélectionné de telle sorte que le transducteur de mesure (2) et le boîtier (4) soient guidés l'un contre l'autre en direction radiale au moins sensiblement sans le moindre jeu.

4. Capteur de trajectoire linéaire selon la revendication 2, **caractérisé en ce que** le transducteur de mesure est logé en étant déplaçable dans le boîtier (4).

5. Capteur de trajectoire linéaire selon l'une quelconque des revendications 1 et 2, **caractérisé en ce que** le transducteur de mesure (2) est logé en étant déplaçable sur le boîtier (4).

6. Capteur de trajectoire linéaire selon l'une quelconque des revendications 1 et 2, **caractérisé en ce que** l'encoche (9) est conçue sous forme triangulaire ou cunéiforme.

7. Capteur de trajectoire linéaire selon l'une quelconque des revendications 1 et 2, **caractérisé en ce que** sur ou dans le boîtier (4) est placée au moins une bobine de correction (7).

8. Capteur de trajectoire linéaire selon la revendication 7, en association avec la revendication 2, **caractérisé en ce que,** vues dans la direction périphérique du boîtier (4), la bobine de mesure (3) et la bobine de correction (7) sont placées côte à côte.

9. Capteur de trajectoire linéaire selon l'une quelconque des revendications 1 et 2, **caractérisé en ce que** le système (6) est placé sur ou dans le boîtier (4).
